# EUROPEAN PATENT SPECIFICATION

(11) **EP 3 364 301 B1**
(45) Date of publication and mention of the grant of the patent: **01.04.2020**
(21) Application number: 17156265.5
(22) Date of filing: 15.02.2017
(51) Int. Cl.: G06F 11/10

(54) **APPARATUS AND ASSOCIATED METHOD**
VORRICHTUNG UND ZUGEHÖRIGES VERFAHREN
APPAREIL ET PROCÉDÉ ASSOCIÉ

(43) Date of publication of application: 22.08.2018
(73) Proprietor: NXP B.V., 5656 AG Eindhoven (NL)
(72) Inventor: Schat, Jan-Peter, Redhill, Surrey RH1 1QZ (GB)
(74) Representative: Bradler, Carola Romana

(56) References cited:
- US-A1- 2004 088 630
- US-A1- 2010 269 004

## Description

The present disclosure relates to an apparatus configured for register contents integrity testing and/or correction of a register file.

A register file may store parameters for use by an electronic device. The checking of the parameters in the register file may be desirable.

US 2010/0269004 A1 discloses a data processing apparatus provided with scan chain cells into which state values are saved from notes within the data processing circuitry when entering a sleep mode from an active mode. When returning back to active mode, the state values are recirculated around the scan chain cells and errors are corrected using error correction code (ECC) techniques.

The invention is defined by the appended independent claims.

According to a first aspect of the present disclosure there is provided an apparatus comprising: a register file comprising at least one chain of registers, the chain of registers comprising a plurality of registers serially connected in a chain, each register of the chain of registers configured to store a parameter in use, the or each chain of registers having an input node at a first end of the chain and an output node at an, opposed, second end of the chain, the register file including a scan chain arrangement configured to provide for sequential output, at the output node, of the parameters stored in the registers of the chain by way of sequentially shifting the parameters stored in each register of the chain to an adjacent register in the chain in a direction of the output node;
an error correction element configured to detect and correct one or more errors in the parameters provided at the output node by the scan chain arrangement based on predetermined error correcting code data determined from the parameters of the register file, and configured to provide the parameters provided at the output node with the one or more corrections having been made to a feedback arrangement;
an error correcting code data determination element configured to calculate the predetermined error correcting code data of the parameters of the one or more chains of registers provided at the output node by the scan chain arrangement.
the feedback arrangement configured such that each parameter provided thereto is fed back to the input node of its originating chain thereby providing for restoration of the parameters stored in the chain of registers once the scan chain arrangement has provided for output of all of the parameters of the chain
wherein the apparatus provides an application mode, a read mode and a correction mode:
the application mode configured such that the parameters of the registers are provided for control of one or more register controlled blocks;
the read mode configured to provide for sequential output, using the scan chain arrangement, of the parameters of the register file at the output node for receipt by the error correcting code data determination element and for provision to the feedback arrangement; and
the correction mode configured to provide for sequential output, using the scan chain arrangement, of the parameters of the register file for receipt by the error correction element to provide parameters with the one or more corrections having been made to the feedback arrangement.

In one or more examples, the error correcting code data determination element is configured to feed back the parameters provided at the output node via the feedback arrangement.

In one or more examples, the predetermined error correcting code data is determined at the time of or in advance of writing the parameters to the register file.
In one or more embodiments, the apparatus includes a controllable selector configured to control which one of a plurality of inputs are provided to the input node of the register file at any one time, the selector comprising at least;
a first input configured to receive parameters with the one or more corrections having been made from the feedback arrangement provided thereto by the error correction element; and
a second input configured to receive parameters from the feedback arrangement provided thereto by the scan chain arrangement without correction by the error correction element.

In one or more examples, in the read mode the controllable selector is configured to provide the second input to the input node. In one or more examples, in the correction mode the controllable selector is configured to provide the first input to the input node.

In one or more embodiments, the error correction element is configured to provide for correction of the one or more errors by determination of the one or more corrections using the error correcting code data. In one or more embodiments, the error correction element is configured to provide for correction of the one or more errors by identification of an error in one or more of the parameters using the error correcting code data and obtaining the one or more corrections from a hypervisor to be fed back via the feedback arrangement.

In one or more embodiments, the error correction element is configured to provide, in response to determination of the presence of an error in the parameters output by the scan chain arrangement that is identifiable but not correctable using the predetermined error correcting code data, each parameter output by the scan chain arrangement to the feedback arrangement.

In one or more embodiments, the error correction element is configured to provide, in response to determination of the presence of an error in the parameters output by the scan chain arrangement that is identifiable but not correctable using the predetermined error correcting code data, for signalling to be sent to a hypervisor for performing further action.

In one or more embodiments, the further action comprises one or more of;
i) writing one or more parameters to the register file;
ii) resetting the apparatus comprising providing the apparatus in a state for writing of parameters to the register file;
iii) deactivate a register controlled block configured to perform its function based on the parameters stored in the register file.

In one or more embodiments, the apparatus includes one or more of;
i) a memory for storing the predetermined error correcting code data and providing them to the error correction element;
ii) a communication element configured to receive signalling from a remote device remote from the apparatus indicative of the corrections to be made to the parameters based on signalling to the remote device representative of the parameters output by the scan chain arrangement.

In one or more embodiments, the apparatus includes a scan protect element configured to provide at least a subset of parameters to the one or more electronic devices controlled by the parameters of the register file when in one or more of the modes other than the application mode.

In one or more embodiments, the error correcting code data is based on systematic codes. In one or more examples, the error correcting code data comprises one or more parity bits. In one or more examples, the systematic codes comprise one or more of Hamming codes, Reed-Solomon codes, Reed-Muller codes, Hadamard codes and Cyclic Redundancy Check codes.

In one or more embodiments, the error correcting code data determination element is configured to provide for determination of error correcting code data for one or more of;
i) each set of parameters output by the scan chain arrangement, the set comprising the parameters of each of the plurality of chains at corresponding register positions along each chain;
ii) each chain of registers comprising the parameters of all of the registers in each particular chain of registers; and
iii) a plurality of chains of registers comprising the parameters of all of the registers in a plurality of the chains of registers.

In one or more embodiments, the apparatus includes at least one register controlled block comprising an electronic device configured to perform a predetermined task based on the parameters stored in at least one or more of the registers of the at least one chain of registers.

In one or more embodiments, the apparatus is configured to determine the occurrence of a single event upset based on the error correcting code data.

In one or more embodiments, the apparatus includes at least one register controlled block comprising an electronic device configured to perform a predetermined task based on the parameters stored in at least one or more of the registers of the at least one chain of registers.

In one or more embodiments, the register file includes a plurality of chains of registers, the plurality of chains of registers connected together in parallel and wherein the scan chain arrangement is configured to provide a plurality of output signals at the output nodes comprising the parameters of the registers of each of the plurality of chains of registers.

In one or more embodiments, the plurality of scan chains have the same length in terms of the number of registers therein.

In one or more embodiments, the registers comprise one or more of flip-flops, latches and dynamic storage elements.

In one or more embodiments, one or more of the scan chain arrangement, the error correction element and the error correcting code data determination element is configured to receive a clock signal, the clock signal providing for sequential output of the parameters of the at least one chain of registers for the scan chain arrangement, the actuation of logic for the correction of any errors in the parameters for the error correcting code data determination element and the actuation of logic for the determination of an error correcting code for the error correcting code data determination element.

In one or more embodiments, the apparatus is configured to provide an application mode in which the parameters of the registers are provided for control of one or more electronic devices; and a correction mode in which the scan chain arrangement is configured to output the parameters for correction of parameters based on the error correcting code data.

In one or more embodiments, the register controlled block or "electronic device" comprises one or more of;
an automotive electronic device;
an automotive driver assistance electronic device;
an automotive based radar device;
an interface or sub-module of an interface for manipulation of data passing through the interface;
an analogue electronic device such as one or more of an amplifier, a filter, a modulator, a demodulator, a mixer;
an analogue / mixed signal block comprising one or more of an analogue to digital convertor, a phase locked loop and a digital to analogue convertor;
a state machine;
a decimation filter;
an encoder;
a decoder; and
an error detection / correction element.

According to a second aspect of the disclosure we provide a method for a register file comprising at least one chain of registers the or each chain of registers comprising a plurality of registers serially connected in a chain, each register of the chain of registers configured to store a parameter in use, the chain of registers having an input node at a first end of the chain and an output node at an, opposed, second end of the chain, the method comprising:
providing for sequential output, at the output node, of the parameters stored in the registers of the chain by way of sequentially shifting the parameters stored in each register of the chain to an adjacent register in the chain in a direction of the output node;
correcting one or more errors in the parameters provided at the output node by the scan chain arrangement based on predetermined error correcting code data determined from the parameters of the register file,
calculating the predetermined error correcting code data of the parameters of the one or more chains of registers provided at the output node by the scan chain arrangement; and
providing the parameters provided at the output node with one or more corrections having been made for feeding back to the input node thereby providing for restoration of the parameters stored in the chain of registers with the one or more corrections at least once all of the parameters of the chain have been output
operating in one of an application mode, a read mode and a correction mode:
   in the application mode, providing for control of one or more register controlled blocks based on the parameters of the registers;
   in the read mode, providing for sequential output of the parameters of the register file at the output node for provision to the feedback arrangement; and
   in the correction mode, providing for sequential output of the parameters of the register file to provide parameters with one or more corrections having been made to the feedback arrangement.

According to a third aspect of the disclosure we provide an electronic device including the apparatus of the first aspect.

In one or more embodiments, the electronic device comprises one of a driver assistance electronic device, a radar device, a sensor, automotive communication device, a mobile phone, an aircraft control system, a safety device, a communication device and a security device.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

One or more embodiments will now be described by way of example only with reference to the accompanying drawings in which:
Figure 1 shows an example embodiment of an apparatus comprising a register file;
Figure 2 shows a flowchart illustrating an example method; and
Figure 3 shows a flowchart illustrating an example method.

The functionality of electronic devices may be controlled by parameters stored in registers. Accordingly, such an electronic device may be termed a "register controlled block". Typically, an electronic device may include many settings requiring many registers in which to store the parameters that represent the settings. The reliability of the data stored in the registers is important as it may affect the operation of the electronic device. The integrity of the registers and the parameters stored therein may be particularly important when the electronic device comprises an electronic device configured to perform a safety-critical function. An example of such an electronic device may be a driver assistance electronic device (or circuitry or a module of the same) for providing at least partial control of an automobile and/or assistance to a driver.

While this embodiment may relate to an automotive based electronic device, the determination and correction of unintended changes to parameters in a register file may be applicable to register files in general for any particular use. Examples of electronic devices that may use such a register file include one or more of an interface or sub-module thereof for manipulation of data passing through the interface; an analogue electronic device such as one or more of an amplifier, mixer or RF block; an analogue / mixed signal block comprising one or more of an analogue-to-digital convertor, a phase locked loop and a digital to analogue convertor; and digital blocks such as one or more of a state machine; a decimation filter; an encoder; a decoder; and an error detection / correction element. Each of the above listed devices may require or operate based on one or more settings that are defined by the parameters stored in the registers. For example, the action of a filter to filter an input signal and generate an output signal may be defined by the parameters.

The registers may be provided in files comprising at least 500, 1000, 2000, 5000, 10000 or more registers. Each registers may comprise a flip-flop, latch, RAM cell, dynamic storage element such as a capacitor or other data storage element.

The function of an electronic device can be disturbed by unintended changes to the parameters stored in the register file that are used by the electronic device to perform its function.

It may be desirable to determine the occurrence of Single Even Upsets (SEUs), also known as soft errors or transient faults. These SEUs may be due to cosmic rays disrupting the contents of one or more of the registers. SEUs usually flip the contents of a single storage element like a flip-flop, latch, RAM cell or dynamic storage element until the state of this storage element is re-written. The effect of an SEU is thus usually limited in time. SEUs may also disturb the contents of multiple storage elements.

In safety-critical applications, the possibility of the occurrence of an SEU may require measures to detect and mitigate possible impairments caused by SEUs.

Automotive standards such as ISO 26262 require manufacturers to prove that a certain percentage of safety-critical SEUs are detected and mitigated. This percentage is called "Diagnostic Coverage" and must be at least 90% to 99%, depending on the safety level of the device (ASIL, Automotive Safety Integrity Level). An apparatus configured to detect SEUs with a high diagnostic coverage, and an easy way to prove this high diagnostic coverage may be advantageous to prove the ASIL level claimed for a system.

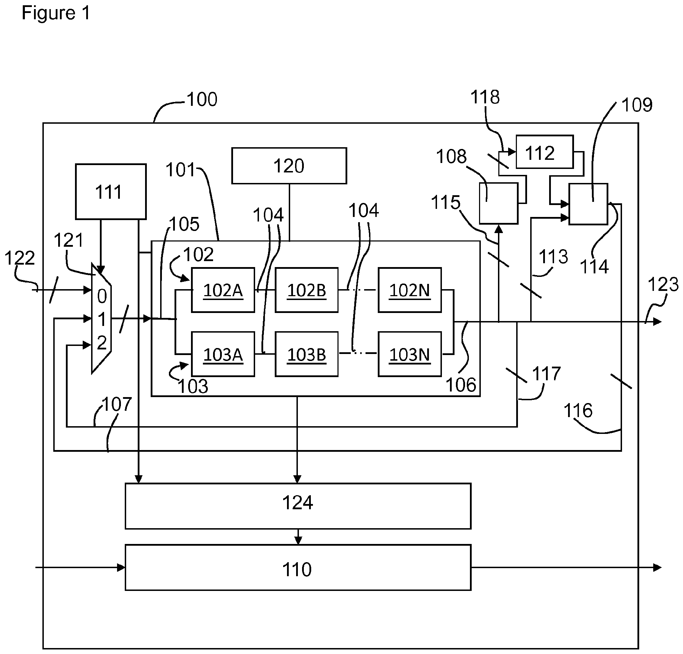

Figure 1 shows an apparatus 100 comprising a register file 101. The register file includes a plurality of registers 102A-N, 103A-N for storing parameters for use by an electronic device 110, also known as a "register controlled block" that connects to the register file 101.

The register file 101 comprises at least one chain of registers and in this example two chains are provided comprising a first chain 102 and a second chain 103. Each chain of registers 102, 103 comprises a plurality of registers serially connected in a chain-like manner. The first chain comprises registers 102A, 102B and so forth until 102N. The second chain comprises registers 103A, 103B and so forth until 103N. It will be appreciated that the chains of registers 102, 103 may be of any length depending on the number of parameters required to be stored. In this example, the first and second chains of registers 102, 103 include the same number of registers. Each chain is formed by the registers being connected together in series by logic elements 104, which collectively form, in part, a scan chain arrangement. The one or more chains of registers have input nodes 105 at a first end of the chain 102, 103 and output nodes 106 at an, opposed, second end of the chain 102, 103. In this example, in the figures, the input node 105 and the output node 106 is shown as being shared by the plurality of chains of registers for simplicity but, in fact, each chain of registers 102, 103 have their own input and output node 105, 106. In other examples, one or more of the input nodes and output nodes for a plurality of chains of registers may be shared and the signals multiplexed and de-multiplexed accordingly. The register file may be considered to comprise M separate chains and wherein each chain includes N registers. In this example, the output from the scan chain arrangement is the parameters from the M chains of registers over M data lines (from M output nodes) which are output sequentially over N output periods. In this example, it will be appreciated that M=2 comprising the first chain of registers 102 and the second chain of registers 103.

The register file 101 includes a scan chain arrangement, embodied as the hardware logic elements 104, configured to provide for sequential output, at the output nodes 106, of the parameters stored in the registers of the chain by way of sequentially shifting the parameters stored in each register 102A-N, 103A-N of the chain 102, 103 to an adjacent register in the chain in a direction of the output nodes 106. As each parameter reaches the final registers 102N, 103N in the chain it is then output from the chain on the shift. In this example, the register file 101 includes a plurality of chains of registers and the scan chain arrangement is configured to provide an output signal at the output nodes 106 comprising the parameters of the registers of each of the plurality of chains of registers. A hardware based scan chain arrangement may provide for efficient output of the parameters.

The scan chain arrangement is not shown in detail as such structures are known to those skilled in the art. However, in principle, the scan chain arrangement may provide a scan process of all the registers by performing a plurality of shift actions such that the parameters of each register is shifted along the chain to be output at the output node after at least a number of shift actions equal to the number of registers in the chain. The scan chain arrangement includes the logic elements 104 between the registers providing for shifting of a parameter stored in a first register, register 102A for example, to an adjacent register, register 102B for example, such that all the parameters in all of the registers of the chain move along the chain from register to adjacent register until they are output at the output nodes 106. The scan chain arrangement typically receives a clock signal to synchronise the shifting of parameters along the chain of registers. The scan chain arrangement therefore performs a plurality of shift actions, which may be equal to the number of registers in the chain in order to provide for output of every parameter stored in the registers of the chain.

The apparatus 100 comprises an error correction element 109. The error correction element 109 is configured to detect errors in the parameters stored in the register file as part of the scan chain read out process and, if possible, provide for their correction. The error correction element 109 is configured to detect and correct one or more errors in the parameters provided at the output node(s) 106 by the scan chain arrangement based on predetermined error correcting code data from a memory 112. The error correcting code data is determined from the application of an error correcting code algorithm to the parameters of the register file 101. The error correcting code data may be determined from the parameters from a previous scan chain arrangement output or calculated at the time of or in advance of the parameters being written to the register file 101, such as by a hypervisor. The error correcting code data provided to the memory 112 may be calculated by the apparatus 100 or communicated thereto by a different apparatus. The error correction element 109 is configured to output the parameters provided to it from the output node with the one or more corrections having been made. The output 114 of the error correction element is provided to a feedback arrangement shown generally as 107, which will be described in more detail below. In particular, the parameters are provided from the error correction element 109 to a first feedback line 116 of the feedback arrangement 107. While in this example the error correction element 109 is configured to make the corrections and use the local memory 112, in other examples, the error correction element 109 may provide for communication with a remote device, using a communication element (not shown), the remote device configured to receive the parameters and make the corrections and provide the corrected parameters and optionally parameters where correction was not necessary back to the error correction element 109 for providing to the feedback arrangement 107. Accordingly, the error correction element 109 may provide for error correction of the parameters read out by the scan chain arrangement and provide the parameters for feeding back to the register file 101. In general, the error correction element may be configured to identify errors in parameters and provide for correction either using the error correcting code data or by providing signalling to a hypervisor (or other device having information about what the parameters should be) which provides information indicative of the corrections required to the error correction element 109.

The error correction element 109 is configured to receive the M parameters (from M chains) for each N output period shifts of the scan chain arrangement from the output node 106 via branch line 113. The error correction element 109 may be configured to receive the error correcting code data from the memory 112 and make one or more comparisons between functions of one or more of the parameters and the error correcting code data. Accordingly, if the error correcting code data is a parity bit, then the calculation of a parity of the parameters may be performed and compared to the stored error correcting code data. If there is a discrepancy, the error correction element 109 is configured to determine which parameter is incorrect and, if possible, correct it. Accordingly, the output from output 114 comprises the parameters provided at the output node 106 that did not require correction along with those where a correction has been made for providing to the feedback arrangement 107. It will be appreciated that whether the error correction element 109 calculates and implements one or more corrections to the parameters or if it detects errors and receives information from a hypervisor or the like to make corrections, those corrections may be made as part of the scan chain read out process and the feeding back of original and corrected parameters thereby providing for efficient correction of errors.

The error correcting code data may each relate to one or more of; all the parameters of one or more of the chains; the parameters of a subset of one or more of the chains or parts thereof; the parameters of one or more predefined parts of one or more of the chains; the parameters of a set of corresponding register positions in the plurality of chains; the parameters of each whole chain; the parameters of all of the registers of the register file or any other combination thereof. It will be appreciated that the error correcting code data may be determined based on different combinations of parameters where the different combinations have one or more parameters in common. In this example, the error correcting code data is determined based on a Hamming Code (with a Hamming Distance of 4, for example) and may therefore be used for error correction. The error correcting code data, in this example, is determined for each set of parameters provided at the output node 106 from corresponding register positions across the plurality of chains 102, 103. Thus, first error correcting code data may relate to the parameters 102N and 103N, second error correcting code data may relate to the parameters 102N-1 and 103N-1, and further error correcting code data may relate to the parameters of registers 102B and 103B and so on. In addition, in one or more examples, error correcting code data may be determined for all the parameters of each chain. The provision of error correcting code data for different overlapping combinations of parameters may assist in the identification of which parameters are in error and how to correct them.

The apparatus 100 of the example further includes a feedback arrangement 107 configured such that each parameter provided thereto is fed back to the input nodes 105 thereby providing for restoration of the parameters stored in the chain of registers 102, 103 once the scan chain arrangement has provided for output of all of the parameters of the chain and completed the scan process. Thus, as the action of the scan chain arrangement is to shift parameters stored in each register of the chain towards the output nodes 106, providing each parameter output by the error correction element at the output 114 to the input nodes 105 will result in the original parameters, subject to any corrections that are made, being stored in the appropriate register once the scan chain arrangement has completed at least the same number of shifts as there are registers in the chain. Accordingly, a parameter fed back to the input will be shifted along the chain by the scan chain arrangement. With an appropriate number of shift actions (such as N shift actions for N registers in the one or more chains), the parameter may be placed in the register it was stored in prior to the initiation of the scan process. Further, if corrections are required to the parameters as they are output from the output node 106, the corrected parameters or, in particular, a combination of original and corrected parameters can be provided to the first feedback line 116 feedback arrangement 107 for restoration of the register file.

In one or more examples, the parameters of registers 102N, 103N may be fed back to the input nodes 105 on a first shift action by the scan chain arrangement. In other examples, it may require more shift actions than there are registers in a chain to restore the or each chain of registers to its previous state before the scan-chain arrangement began its serial output of parameters. For example, the first parameter output by the scan chain arrangement and error correction element may be stored in a buffer over one clock cycle (for example) prior to being fed back to the input nodes 105 on the next shift action. In such an example, it will require N+1 shifts by the scan chain arrangement to restore a chain of registers of N registers. In one or more examples, the error correction element 109 may require one or more additional clock cycles (compared to the number of clock cycles required to output the register file) to perform its identification and subsequent correction of errors. Regardless of the number of clock cycles / shifts required, the feedback arrangement 107 may provide for efficient restoration of the parameters (including some that may have been modified) in the or each chain of registers as part of the scan process performed by the scan chain arrangement to read-out the parameters of the chain.

The apparatus 100, in one or more examples, comprises an error correcting code data determination element 108 configured to calculate the predetermined error correcting code data of the parameters of the one or more chains 102, 103 of registers provided at the output node 106 by the scan chain arrangement. Accordingly, the apparatus may be configured to provide the parameters output at the output node(s) 106 to both a branch line 115 for receipt by the error correcting code data determination element 108 and simultaneously and directly to the feedback arrangement 107 by way of a second feedback line 117 of the feedback arrangement 107.

Thus, in one or more examples, the feedback arrangement 107 may include two lines to feedback parameters to the input node 105 comprising the first feedback line 116 to feedback parameters from the error correction element 109 and a second feedback line to feedback unchanged parameters provided at the output node 106. This arrangement may provide an efficient means for restoring the register file with parameters and corrected parameters. Further, the error correcting code data determination element 108 is not required to output parameters to the feedback arrangement 107, as this is performed by the scan chain arrangement and the branch line 115.

The error correcting code data determination element 108 may provide as an output at 118, the error correcting code data. The output 118 provides the error correcting code data to the memory 112 for subsequent use by the error correction element 109.

The error correcting code data may be based on a systematic code. In one or more examples, the systematic codes comprise one or more of parity codes, Hamming codes, Reed-Solomon codes, Reed-Muller codes, Hadamard codes and Cyclic Redundancy Check codes. Accordingly, the error correcting code data determination element 108 may be configured to provide a function to calculate one or more of the above (e.g. systematic) codes or other error correcting code to provide the error correcting code data.

The Hamming SECDED (Single Error Correct - Double Error Detect) code may be used. It is known as the standard code for error-correcting code memory. This code is able to correct all single-bit errors and detect all two-bit errors. With k being the number of parity bits, and M (the number of register scan chains) being the number of data bits from the register scan chains, the equation 2k-1-k ≥ M holds, e.g. for M = 502 and below, only k=10 parity bits are needed.

In this example, the parameters are stored in the registers 102A-N, 103A-N and the error correcting code data are stored in the memory 112. In one or more examples, the error correcting code data may be stored in one or more registers in the register file 101. Thus, predetermined registers of the register file 101 may be predetermined to receive error correcting code data. In such an example, the error correcting code data determination element 108 may be configured to write the code data to one or more registers of the register file. The writing of the error correcting code data may be performed by write logic 120, described below or as part of the scan chain read out and feedback as will be described below. The memory 112 may not be required and the error correction element 109 may simply use the parameters read from the register file. In one or more examples, the error correcting code data may be stored in a combination of the memory 112 and one or more registers of the register file 101.

The register controlled block 110 may comprise an electronic device configured to perform a predetermined task based on the parameters stored in at least one or more of the registers 102A-N, 103A-N of the at least one chain of registers 102, 103. The register controlled block may or may not form part of the apparatus 100. Nevertheless, the register controlled block uses the parameters stored in the registers to perform its function.

In one or more examples, the apparatus may be configured to provide a plurality of operational modes. For example, the apparatus may provide two or more of an application mode, a read mode and a correction mode. The application mode may be configured such that the parameters of the registers 102A-N, 103A-N are provided for control of one or more register controlled blocks 110. Accordingly, in such a mode, the writing and/or reading out of the parameters of the registers may be restricted to prevent disruption to the operation of the one or more registered controlled blocks.

The read mode may be configured to provide for sequential output, using the scan chain arrangement, of the parameters of the register file 101 at the output node 106 for receipt by the error correcting code data determination element 108 and for provision of the read out parameters to the second feedback line 117 of the feedback arrangement 107. In such a mode, the operation of the error correction element 109 may or may not be deactivated. For example, reading from the memory 112 by the error correction element 109 may be restricted.

The correction mode may be configured to provide for sequential output, using the scan chain arrangement, of the parameters of the register file 101 for receipt by the error correction element 109 to provide parameters with the one or more corrections having been made to the first feedback line 116 of the feedback arrangement 107. In such a mode, the operation of the error correcting code data determination element 108 may be deactivated. For example, writing to the memory 112 by the error correcting code data determination element 109 may be restricted and/or the determination of the error correcting code data may be deactivated in this mode.

The apparatus 100 may provide a write mode in which parameters are written to the registers of the register file 101. The scan chain arrangement may not be used in such a write operation.

The apparatus, in one or more examples, includes write logic 120 for writing to the registers of the register file 101. The write logic 120 may be typically used to purposely change the register values during normal use. However, in this example, the write logic 120 may be used when the error correction element 109 does not have sufficient information from the error correcting code data to make a correction to the parameters. In one or more examples, a hypervisor having overall control of the apparatus may reset the system of which the apparatus 100 forms part to reinitialise the register file 101 using the write logic 120 based on the error correction element not having sufficient information to make one or more corrections to the parameters of the register file 101.

The combination of performing error correction with the scan chain arrangement and feedback arrangement to feedback the state of the registers including any corrections may provide an advantageous benefit for efficiently handling SEU error with reduced bandwidth requirements between the apparatus 100 and a hypervisor. The feedback arrangement 107 obviates the need for the hypervisor to re-write the parameters to the registers following a scan chain read out, parameter correction action, or on identification of an error. The performance of the correction of errors as part of the scan chain readout process also provides an efficient means for ensuring the integrity of the register file. Accordingly, data flow from a hypervisor to the apparatus 100 and from the apparatus 100 to the hypervisor may be reduced while making efficient use of a scan-chain arrangement.

We also disclose a combination of the apparatus 100 and a hypervisor. In such a combination the determination of the occurrence of an error may be determined by the error correction element 109 and if the error correcting code data provides sufficient information for the error to be corrected, then the correction is made by the error correction element 109 and if the error correcting code data do not provide sufficient information for the error to be corrected then the apparatus 100 may provide for restorative action of the parameters by the hypervisor. The restorative action by the hypervisor may comprise one or more of resetting or "rebooting" the system of which the apparatus forms part and/or rewriting the correct parameters to the registers 102A-N, 103A-N.

The apparatus 100 further comprises a controllable selector 121 configured to select which one of a plurality of inputs is provided to the input node 105 at any one time. Thus, the selector 121 may provide for control of which parameters are fed back to the input node 105 for "drawing" into the chains of registers during a scan chain read-out operation. In one or more examples, the selector 121 has two positions (labelled "1" and "2" in Figure 1). Accordingly, the selector 121 may be configured to provide for selection of which of at least the first and second feedback lines 116 and 117 is connected to the input node 106. Thus, if the apparatus 100 is configured to calculate error correcting code data by way of the error correcting code data determination element 108, then the second feedback line 117 may be connected to the input node 106 and any parameters fed back along the first feedback line 116 may be ignored. If the apparatus 100 is configured to perform error correction by way of the error correction element 109, then the first feedback line 116 may be connected to the input node 106 by the selector 121 and any parameters fed back along the second feedback line 117 may be ignored.

In the read mode the apparatus may be configured to control the selector 121 to provide to the input node 105 the parameters output from the output node 106. These parameters may be received via the second feedback line 117 of the feedback arrangement 107. In the correction mode the apparatus may be configured to control the selector 121 to provide to the input node 105 the parameters output from the error correction element 109. These parameters may be received via the first feedback line 116 of the feedback arrangement 107.

In the application mode the selector 121 may not provide for any connection of an input to the input node 105.

In this example, the selector 121 provides a third position in which parameters received from a production testing input 122 are provided to the input node 105 and the other inputs are ignored.

The production testing input 122 and a production testing output 123 is shown for inputting and outputting the parameters of the registers during production scan testing. It will be appreciated that the production testing input 122 and a production testing output 123 are not necessary for the determination of the occurrence of an SEU during the scan chain read-out described above. The production testing input 122 and production testing output may be used for testing the apparatus during fabrication, quality control or commissioning.

A test control block 111 is configured to provide the required signalling to enable a scan chain read out of the registers and, by virtue of the feedback arrangement 107, restoration of the register file 101 with its original contents or its original contents with any corrections to the parameters having been made by the error correction element 109. Thus, in one or more examples, the test control block 111 may be configured to perform one or more of;
placing all the registers 102A-N, 103A-N in a scan shift mode to allow for shifting of the parameters between registers;
routing of a clock signal to the scan chain arrangement to enable shifting of the parameters along the chain of registers to the output node 106;
control the error correcting code data determination element 108 to output the error correcting code data to the memory 112;
control the error correction element 109 to receive the error correcting code data from the memory 112 and provide for correction of parameters provided thereto;
set the selector 121 to route the appropriate input 116, 117, 122 to the input node 105; and
make a scan protect unit 124 active during activation of the scan chain arrangement.

On completion of the operation of a scan chain read-out (which may include calculation of the error correcting code data or correction of parameters or checking of parameters without correction) the test control block 111 may cease to provide the required signalling. In such a situation, the apparatus may return to a default mode of operation, such as the application mode described above.

The optional scan protect unit 124 is configured to set one or more critical inputs of the Register Controlled Block 110, that would normally be provided by the register file 101 to predetermined values during actuation of the scan test arrangement. Thus, while the parameters are being shifted and read-out of the chains, the register controlled block 110 may be provided with one or more inputs by the scan protect unit 124 rather than by the parameters of the register file 101. The scan protect unit 124 may be operational when the apparatus is in modes other than the application mode when the contents of the registers may be changing.

In use, the apparatus 100 is initialized and the parameters may be written to the registers for use by the register controlled block 110 in an application mode. The memory of the apparatus 112 may be provided with the predetermined error correcting code data or the apparatus 100 may be configured to operate in the read mode to calculate the error correcting code data. In the read mode, the scan chain arrangement may be activated and the parameters are read out of the registers and provided to both the error correcting code data determination element 108 and feedback arrangement 107. Accordingly, the registers are restored with the parameters following the scan chain read out and the error correcting code data determination element 108 is provided with the parameters for calculation of the error correcting code data based on parameters or different combinations of the parameters. The error correcting code data determination element 108 provides said error correcting code data to the memory 112.

In a correction mode, the scan chain arrangement may be activated and the parameters are read out of the registers and provided to the error correction element 109, which using the error correcting code data from the memory 112 may identify and, if possible, correct the parameters as they are read from the registers 102A-N, 103A-N by the scan chain arrangement. The error correction element 109 may be configured to provide the parameters with any corrections to the parameters having been made to the feedback arrangement 107 at the time of the scan chain read out procedure. Thus, the parameters (including any corrections) are written back into the one or more chains of registers at least as part of the process to read out the chains of registers. In other examples, the error correction element 109 may buffer one or more or all of the parameters in a memory to allow for the error correction to be performed before providing the parameters, in series, to the feedback arrangement 107 for restoration of the register file 101.

As described above, if the error correcting code data provides sufficient information for an identified error in the parameters to be corrected, the error correction element 109 may provide the correction. However, there may be times when the error correction element 109 may identify an error but the error correcting code data does not provide sufficient information to correct the error. Thus, in response to determination of the presence of a non-correctable error in the parameters output by the scan chain arrangement, the error correction element 109 may provide each parameter output by the scan chain arrangement to the feedback arrangement 107. This may restore the registers of the register file 101 with the parameters where one or more of them is incorrect, but it may provide for operation of the register controlled block until a hypervisor or the like can provide further error correcting code data or actuation of the write logic to write correct parameters to one or more of the registers 102A-N, 103A-N. The error correction element 109 or other part of the apparatus 100 may be configured to inform a remote device, such a hypervisor, of the identification of an un-correctible error so that further action may be taken.

The hypervisor, in response to the signalling indicative of an un-correctable error, provides for one or more of;
i) writing one or more parameters to the register file;
ii) resetting the apparatus comprising providing the apparatus in a state for writing of parameters to the register file;
iii) deactivate a register controlled block 110 configured to perform its function based on the parameters stored in the register file.

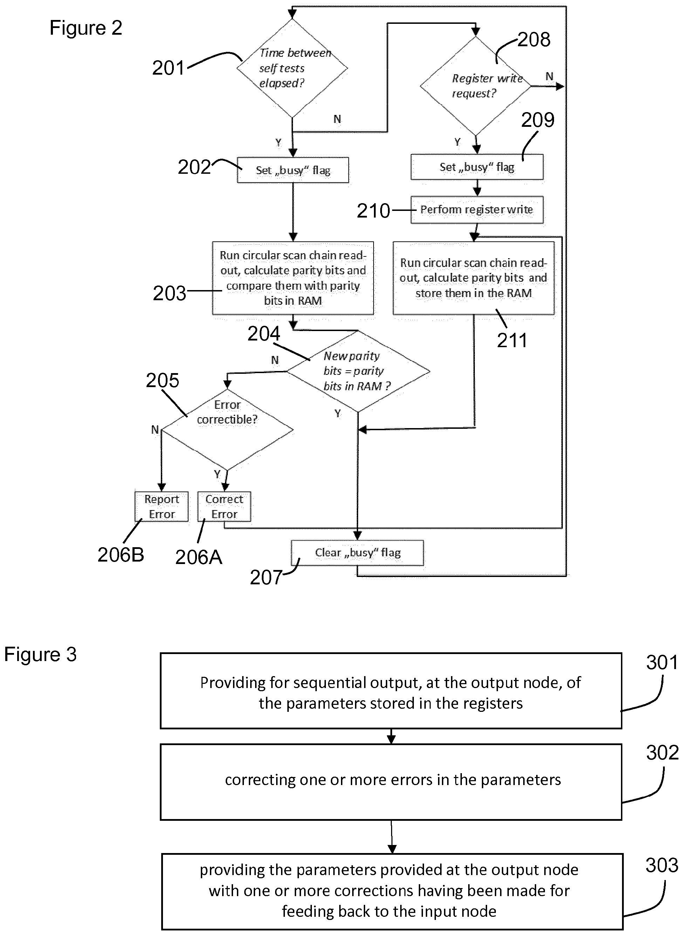

Figure 2 shows an example method of operation. At step 201, the apparatus 100 or a hypervisor may determine whether it is time to perform the register contents integrity test and enter the correction mode to correct any errors that may have occurred. A predetermined schedule of test periods or a timer may be referenced to determine if a predetermined "time between tests" time as elapsed. If it is time, a busy flag is set at step 202 to indicate that the correction mode is active. The busy flag may be used by the register controlled block 201 to determine when the parameters of the registers may be read and/or to actuate the scan protect unit 124. Step 203 shows the activation of the scan chain arrangement to output the register contents to the error correction element 109. In the figure the error correcting code data comprises parity bits, although it will be appreciated that other error correcting code data may be provided. Step 204 shows a comparison between the error correcting code data from the memory 112 and a function of the parameters read out from the registers. If the error correcting code data differ from the function, the error correction element may identify an error may take to correct it at step 205. Step 205 comprises determining if the error correcting code data (and any other information available to the error correction element) provide sufficient information for the error to be corrected. If the error is correctable, the method proceeds to step 206A and the error is corrected. If the error is not correctable, the identification of the error is reported at step 206B. Step 207 shows the busy flag being cleared and the apparatus returning to an application mode. If the error correcting code data matches the function then it is concluded no errors are present and the method proceeds to step 207.

Figure 2 also shows another branch illustrating the operation of the apparatus 100 if it is necessary to write (step 208) the one or more parameters to the register file 101. A busy flag is set at step 209 to indicate that the correction mode is active. The busy flag may be used by the register controlled block 201 to determine when the parameters of the registers may be read and/or to actuate the scan protect unit 124. The registers are written to at step 210. The apparatus is then configured to proceed to step 211 where the read out mode is entered to calculate the error correcting code data for the new written parameters. The method then proceeds to step 207.

Figure 3 shows an example method of operation of the apparatus 100. For a register file comprising at least one chain of registers the or each chain of registers comprising a plurality of registers serially connected in a chain, each register of the chain of registers configured to store a parameter in use, the chain of registers having an input node at a first end of the chain and an output node at an, opposed, second end of the chain,
providing 301 for sequential output, at the output node, of the parameters stored in the registers of the chain by way of sequentially shifting the parameters stored in each register of the chain to an adjacent register in the chain in a direction of the output node;
correcting 302 one or more errors in the parameters provided at the output node by the scan chain arrangement based on predetermined error correcting code data determined from the parameters of the register file, and
providing 303 the parameters provided at the output node with one or more corrections having been made for feeding back to the input node thereby providing for restoration of the parameters stored in the chain of registers with the one or more corrections at least once all of the parameters of the chain have been output.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. An apparatus (100) comprising:
a register file (101) comprising at least one chain of registers (102A-N, 103A-N), the chain of registers comprising a plurality of registers serially connected in a chain, each register of the chain of registers configured to store a parameter in use, the or each chain of registers having an input node (105) at a first end of the chain and an output node (106) at an, opposed, second end of the chain, the register file including a scan chain arrangement configured to provide for sequential output, at the output node, of the parameters stored in the registers of the chain by way of sequentially shifting the parameters stored in each register of the chain to an adjacent register in the chain in a direction of the output node;
an error correction element (109) configured to detect and correct one or more errors in the parameters provided at the output node by the scan chain arrangement based on predetermined error correcting code data determined from the parameters of the register file, and configured to provide the parameters provided at the output node with the one or more corrections having been made to a feedback arrangement (107);
an error correcting code data determination element (108) configured to calculate the predetermined error correcting code data of the parameters of the one or more chains of registers provided at the output node by the scan chain arrangement;
the feedback arrangement configured such that each parameter provided thereto is fed back to the input node of its originating chain thereby providing for restoration of the parameters stored in the chain of registers once the scan chain arrangement has provided for output of all of the parameters of the chain;
the apparatus being **characterized in that** it provides an application mode, a read mode and a correction mode:
the application mode configured such that the parameters of the registers are provided for control of one or more register controlled blocks;
the read mode configured to provide for sequential output, using the scan chain arrangement, of the parameters of the register file at the output node for receipt by the error correcting code data determination element and for provision to the feedback arrangement; and
the correction mode configured to provide for sequential output, using the scan chain arrangement, of the parameters of the register file for receipt by the error correction element to provide parameters with the one or more corrections having been made to the feedback arrangement.

2. An apparatus (100) according to claim 1, wherein the apparatus includes a controllable selector (121) configured to control which one of a plurality of inputs are provided to the input node (105) of the register file at any one time, the selector comprising at least;
a first input configured to receive parameters with the one or more corrections having been made from the feedback arrangement provided thereto by the error correction element; and
a second input configured to receive parameters from the feedback arrangement provided thereto by the scan chain arrangement without correction by the error correction element.

3. An apparatus (100) according to any preceding claims, wherein the error correction element (109) is configured to provide for correction of the one or more errors by determination of the one or more corrections using the error correcting code data and/or by identification of an error in one or more of the parameters using the error correcting code data and obtaining the one or more corrections from a hypervisor to be fed back via the feedback arrangement (107).

4. An apparatus (100) according to any preceding claim, wherein the error correction element (109) is configured to provide, in response to determination of the presence of an error in the parameters output by the scan chain arrangement that is identifiable but not correctable using the predetermined error correcting code data, each parameter output by the scan chain arrangement to the feedback arrangement (107).

5. An apparatus (100) according to any preceding claim 4, wherein the error correction element (109) is configured to provide, in response to determination of the presence of an error in the parameters output by the scan chain arrangement that is identifiable but not correctable using the predetermined error correcting code data, for signalling to be sent to a hypervisor for performing further action.

6. An apparatus (100) according to claim 5, wherein the further action comprises one or more of;
i) writing one or more parameters to the register file (101);
ii) resetting the apparatus comprising providing the apparatus in a state for writing of parameters to the register file;
iii) deactivate a register controlled block (110) configured to perform its function based on the parameters stored in the register file.

7. An apparatus (100) according to any preceding claim wherein the apparatus includes one or more of;
i) a memory (112) for storing the predetermined error correcting code data and providing them to the error correction element;
ii) a communication element configured to receive signalling from a remote device remote from the apparatus indicative of the corrections to be made to the parameters based on signalling to the remote device representative of the parameters output by the scan chain arrangement.

8. An apparatus (100) according to any preceding claim, wherein the apparatus includes a scan protect element configured to provide at least a subset of parameters to the one or more electronic devices controlled by the parameters of the register file when in one or more of the modes other than the application mode.

9. An apparatus (100) according to any preceding claim in which the error correcting code data is based on a systematic code.

10. An apparatus (100) according to any preceding claim in which the error correcting code data determination element (108) is configured to provide for determination of error correcting code data for one or more of;
i) each set of parameters output by the scan chain arrangement, the set comprising the parameters of each of the plurality of chains at corresponding register positions along each chain;
ii) each chain of registers comprising the parameters of all of the registers in each particular chain of registers (102A-N, 103A-N); and
iii) a plurality of chains of registers comprising the parameters of all of the registers in a plurality of the chains of registers.

11. An apparatus (100) according to any preceding claim, wherein the apparatus includes at least one register controlled block (110) comprising an electronic device configured to perform a predetermined task based on the parameters stored in at least one or more of the registers of the at least one chain of registers.

12. A method for a register file comprising at least one chain of registers the or each chain of registers comprising a plurality of registers serially connected in a chain, each register of the chain of registers configured to store a parameter in use, the chain of registers having an input node at a first end of the chain and an output node at an, opposed, second end of the chain,
the method comprising:
providing (301) for sequential output, at the output node, of the parameters stored in the registers of the chain by way of sequentially shifting the parameters stored in each register of the chain to an adjacent register in the chain in a direction of the output node;
calculating predetermined error correcting code data of the parameters of the one or more chains of registers provided at the output node by the scan chain arrangement;
correcting (302) one or more errors in the parameters provided at the output node by the scan chain arrangement based on the predetermined error correcting code data determined from the parameters of the register file;
providing (303) the parameters provided at the output node with one or more corrections having been made for feeding back to the input node thereby providing for restoration of the parameters stored in the chain of registers with the one or more corrections at least once all of the parameters of the chain have been output;
the method further being **characterized in that** it comprises:
operating in one of an application mode, a read mode and a correction mode:
in the application mode, providing for control of one or more register controlled blocks based on the parameters of the registers;
in the read mode, providing for sequential output of the parameters of the register file at the output node for provision to the feedback arrangement; and
in the correction mode, providing for sequential output of the parameters of the register file to provide parameters with one or more corrections having been made to the feedback arrangement.

13. An electronic device including the apparatus of claims 1 to 11.

## Patentansprüche

1. Vorrichtung (100), die Folgendes umfasst:
eine Registerdatei (101), die wenigstens eine Kette von Registern (102A-N, 103A-N) umfasst, wobei die Kette von Registern mehrere Register umfasst, die seriell in einer Kette verbunden sind, wobei jedes Register der Kette von Registern konfiguriert ist, einen benutzten Parameter zu speichern, wobei die oder jede Kette von Registern einen Eingangsknoten (105) an einem ersten Ende der Kette und einen Ausgangsknoten (106) an einem entgegengesetzten zweiten Ende der Kette aufweist, wobei die Registerdatei eine Abtastkettenanordnung enthält, die konfiguriert ist, die sequentielle Ausgabe am Ausgangsknoten der in den Registern der Kette gespeicherten Parameter über das sequentielle Verschieben der in jedem Register der Kette gespeicherten Parameter zu einem benachbarten Register in der Kette in einer Richtung des Ausgangsknotens bereitzustellen;
ein Fehlerkorrekturelement (109), das konfiguriert ist, einen oder mehrere Fehler in den durch die Abtastkettenanordnung an dem Ausgangsknoten bereitgestellten Parametern basierend auf vorgegebenen Fehlerkorrekturcodedaten, die aus den Parametern der Registerdatei bestimmt werden, zu detektieren und zu korrigieren, und konfiguriert ist, die am Ausgangsknoten bereitgestellten Parameter mit der einen oder den mehreren Korrekturen, die ausgeführt worden sind, einer Rückkopplungsanordnung (107) bereitzustellen;
ein Fehlerkorrekturcodedaten-Bestimmungselement (108), das konfiguriert ist, die vorgegebenen Fehlerkorrekturcodedaten der Parameter der einen oder der mehreren Ketten von Registern, die durch die Abtastkettenanordnung am Ausgangsknoten bereitgestellt werden, zu berechnen;
die Rückkopplungsanordnung, die so konfiguriert ist, dass jeder ihr bereitgestellte Parameter zu dem Eingangsknoten seiner Ursprungskette rückgekoppelt wird, wodurch die Wiederherstellung der in der Kette von Registern gespeicherten Parameter bereitgestellt wird, sobald die Abtastkettenanordnung die Ausgabe aller Parameter der Kette bereitgestellt hat;
wobei die Vorrichtung **dadurch gekennzeichnet ist, dass** sie eine Anwendungsbetriebsart, eine Lesebetriebsart und eine Korrekturbetriebsart bereitstellt:
wobei die Anwendungsbetriebsart so konfiguriert ist, dass die Parameter der Register zur Steuerung eines oder mehrerer registergesteuerter Blöcke bereitgestellt werden;
wobei die Lesebetriebsart konfiguriert ist, eine sequentielle Ausgabe unter Verwendung der Abtastkettenanordnung der Parameter der Registerdatei an dem Ausgangsknoten zum Empfang durch das Fehlerkorrekturcodedaten-Bestimmungselement und zur Bereitstellung für die Rückkopplungsanordnung bereitzustellen; und
wobei die Korrekturbetriebsart konfiguriert ist, die sequentielle Ausgabe unter Verwendung der Abtastkettenanordnung der Parameter der Registerdatei zum Empfang durch das Fehlerkorrekturelement bereitzustellen, um die Parameter mit der einen oder den mehreren Korrekturen, die ausgeführt worden sind, der Rückkopplungsanordnung bereitzustellen.

2. Vorrichtung (100) nach Anspruch 1, wobei die Vorrichtung eine steuerbare Auswahlvorrichtung (121) enthält, die konfiguriert ist, zu steuern, welche der mehreren Eingaben zu irgendeinem Zeitpunkt dem Eingangsknoten (105) der Registerdatei bereitgestellt wird, wobei die Auswahlvorrichtung wenigstens Folgendes umfasst;
einen ersten Eingang, der konfiguriert ist, die Parameter mit der einen oder den mehreren Korrekturen, die ausgeführt worden sind, von der Rückkopplungsanordnung, der sie durch das Fehlerkorrekturelement bereitgestellt worden sind, zu empfangen; und
einen zweiten Eingang, der konfiguriert ist, die Parameter von der Rückkopplungsanordnung, der sie durch die Abtastkettenanordnung ohne die Korrektur durch das Fehlerkorrekturelement bereitgestellt worden sind, zu empfangen.

3. Vorrichtung (100) nach einem vorhergehenden Anspruch, wobei das Fehlerkorrekturelement (109) konfiguriert ist, die Korrektur des einen oder der mehreren Fehler durch die Bestimmung der einen oder der mehreren Korrekturen unter Verwendung der Fehlerkorrekturcodedaten und/oder durch die Identifikation eines Fehlers in einem oder mehreren der Parameter unter Verwendung der Fehlerkorrekturcodedaten und das Erhalten der einen oder der mehreren Korrekturen von einem "Hypervisor", die über die Rückkopplungsanordnung (107) rückzukoppeln sind, bereitzustellen.

4. Vorrichtung (100) nach einem vorhergehenden Anspruch, wobei das Fehlerkorrekturelement (109) konfiguriert ist, in Reaktion auf die Bestimmung des Vorhandenseins eines Fehlers in den durch die Abtastkettenanordnung ausgegebenen Parametern, der identifizierbar, aber nicht unter Verwendung der vorgegebenen Fehlerkorrekturdaten korrigierbar ist, jeden durch die Abtastkettenanordnung ausgegebenen Parameter der Rückkopplungsanordnung (107) bereitzustellen.

5. Vorrichtung (100) nach einem vorhergehenden Anspruch, wobei das Fehlerkorrekturelement (109) konfiguriert ist, in Reaktion auf die Bestimmung des Vorhandenseins eines Fehlers in den durch die Abtastkettenanordnung ausgegebenen Parametern, der identifizierbar, aber nicht unter Verwendung der vorgegebenen Fehlerkorrekturdaten korrigierbar ist, eine Signalisierung bereitzustellen, die an einen "Hypervisor" zum Ausführen einer weiteren Handlung zu senden ist.

6. Vorrichtung (100) nach Anspruch 5, wobei die weitere Handlung eines oder mehrere des Folgenden umfasst;
i) Schreiben eines oder mehrerer Parameter in die Registerdatei (101);
ii) Rücksetzen der Vorrichtung, das das Bereitstellen der Vorrichtung in einem Zustand zum Schreiben von Parametern in die Registerdatei umfasst;
iii) Deaktivieren eines registergesteuerten Blocks (110), der konfiguriert ist, seine Funktion basierend auf den in der Registerdatei gespeicherten Parametern auszuführen.

7. Vorrichtung (100) nach einem vorhergehenden Anspruch, wobei die Vorrichtung eines oder mehrere des Folgenden enthält;
i) einen Speicher (112) zum Speichern der vorgegebenen Fehlerkorrekturdaten und zum Bereitstellen dieser einem Fehlerkorrekturelement;
ii) ein Kommunikationselement, das konfiguriert ist, eine Signalisierung von einer entfernten Vorrichtung, die von der Vorrichtung entfernt ist, zu empfangen, die die Korrekturen angibt, die an den Parametern basierend auf der Signalisierung zu der entfernten Vorrichtung, die die durch die Abtastkettenanordnung ausgegebenen Parameter repräsentiert, auszuführen sind.

8. Vorrichtung (100) nach einem vorhergehenden Anspruch, wobei die Vorrichtung ein Abtastschutzelement enthält, das konfiguriert ist, wenigstens eine Teilmenge der Parameter der einen oder den mehreren elektronischen Vorrichtungen, die durch die Parameter der Registerdatei gesteuert sind, bereitzustellen, wenn sie sich in einer oder mehreren der Betriebsarten mit Ausnahme der Anwendungsbetriebsart befindet.

9. Vorrichtung (100) nach einem vorhergehenden Anspruch, wobei die Fehlerkorrekturcodedaten auf einem systematischen Code basieren.

10. Vorrichtung (100) nach einem vorhergehenden Anspruch, wobei das Fehlerkorrekturcodedaten-Bestimmungselement (108) konfiguriert ist, die Bestimmung der Fehlerkorrekturcodedaten für eines oder mehrere des Folgenden bereitzustellen;
i) jeden von der Abtastkettenanordnung ausgegebenen Satz von Parametern, wobei der Satz die Parameter jeder der mehreren Ketten an entsprechenden Registerpositionen entlang jeder Kette umfasst;
ii) jede Kette von Registern, die die Parameter aller Register in jeder speziellen Kette von Registern (102A-N, 103A-N) umfasst; und
iii) mehreren Ketten von Registern, die die Parameter aller Register in mehreren der Ketten von Registern umfassen.

11. Vorrichtung (100) nach einem vorhergehenden Anspruch, wobei die Vorrichtung wenigstens einen registergesteuerten Block (110) umfasst, der eine elektronische Vorrichtung umfasst, die konfiguriert ist, basierend auf den Parametern, die in wenigstens einem oder mehreren der Register der wenigstens einen Kette von Registern gespeichert sind, eine vorgegebene Aufgabe auszuführen.

12. Verfahren für eine Registerdatei, die wenigstens eine Kette von Registern umfasst, wobei die oder jede Kette von Registern mehrere Register umfasst, die seriell in einer Kette verbunden sind, wobei jedes Register der Kette von Registern konfiguriert ist, einen benutzten Parameter zu speichern, wobei die Kette von Registern einen Eingangsknoten an einem ersten Ende der Kette und einen Ausgangsknoten an einem entgegengesetzten zweiten Ende der Kette aufweist,
wobei das Verfahren Folgendes umfasst:
Bereitstellen (301) für eine sequentielle Ausgabe an dem Ausgangsknoten der in den Registern der Kette gespeicherten Parameter über das sequentielle Verschieben der in jedem Register der Kette gespeicherten Parameter zu einem benachbarten Register in der Kette in einer Richtung des Ausgangsknotens;
Berechnen vorgegebener Fehlerkorrekturcodedaten der durch die Abtastkettenanordnung am Ausgangsknoten bereitgestellten Parameter der einen oder der mehreren Ketten von Registern;
Korrigieren (302) eines oder mehrerer Fehler in den durch die Abtastkettenanordnung am Ausgangsknoten bereitgestellten Parametern basierend auf den aus den Parametern der Registerdatei bestimmten vorgegebenen Fehlerkorrekturdaten;
Bereitstellen (303) der am Ausgangsknoten mit einer oder mehreren Korrekturen, die ausgeführt worden sind, bereitgestellten Parameter zum Rückkoppeln zu dem Eingangsknoten, dadurch Bereitstellen der Wiederherstellung der in der Kette von Registern gespeicherten Parameter mit der einen oder den mehreren Korrekturen, wenigstens sobald alle Parameter der Kette ausgegeben worden sind;
wobei das Verfahren ferner dadurch charakterisiert ist, dass es Folgendes umfasst:
Arbeiten in einer von einer Anwendungsbetriebsart, einer Lesebetriebsart und einer Korrekturbetriebsart:
in der Anwendungsbetriebsart Bereitstellen der Steuerung eines oder mehrerer registergesteuerter Blöcke basierend auf den Parametern der Register;
in der Lesebetriebsart Bereitstellen der sequentiellen Ausgabe der Parameter der Registerdatei an dem Ausgangsknoten zur Bereitstellung für die Rückkopplungsanordnung; und
in der Korrekturbetriebsart Bereitstellen der sequentiellen Ausgabe der Parameter der Registerdatei, um die Parameter mit einer oder mehreren Korrekturen, die ausgeführt worden sind, der Rückkopplungsanordnung bereitzustellen.

13. Elektronische Vorrichtung, die die Vorrichtung nach den Ansprüchen 1 bis 11 enthält.

## Revendications

1. Appareil (100) comprenant :
un fichier de registres (101) comprenant au moins une chaîne de registres (102A-N, 103A-N), la chaîne de registres comprenant une pluralité de registres connectés sériellement en chaîne, chaque registre de la chaîne de registres étant configuré pour mémoriser un paramètre utilisé, la ou chaque chaîne de registres présentant un nœud d'entrée (105) à une première extrémité de la chaîne et un nœud de sortie (106) à une seconde extrémité opposée de la chaîne, le fichier de registres comportant un agencement de chaîne de balayage configuré pour fournir une sortie séquentielle, au niveau du nœud de sortie, des paramètres mémorisés dans les registres de la chaîne par décalage séquentiel des paramètres mémorisés dans chaque registre de la chaîne vers un registre adjacent dans la chaîne dans un sens du nœud de sortie ;
un élément de correction d'erreurs (109) configuré pour détecter et corriger une ou plusieurs erreurs dans les paramètres fournis au niveau du nœud de sortie par l'agencement de chaîne de balayage en fonction de données de code de correction d'erreurs prédéterminées déterminées à partir des paramètres du fichier de registres, et configuré pour fournir les paramètres fournis au niveau du nœud de sortie avec les une ou plusieurs corrections réalisées à un agencement de renvoi (107) ;
un élément de détermination de données de code de correction d'erreurs (108) configuré pour calculer les données de code de correction d'erreurs prédéterminées des paramètres des une ou plusieurs chaînes de registres fournis au niveau du nœud de sortie par l'agencement de chaîne de balayage ;
l'agencement de renvoi étant configuré de telle sorte que chaque paramètre qui lui est fourni soit renvoyé au nœud d'entrée de sa chaîne de départ permettant ainsi la récupération des paramètres mémorisés dans la chaîne de registres une fois que l'agencement de chaîne de balayage a assuré la sortie de tous les paramètres de la chaîne ;
l'appareil étant **caractérisé en ce qu'**il fournit un mode d'application, un mode de lecture et un mode de correction :
le mode d'application étant configuré de telle sorte que les paramètres des registres soient fournis pour la commande d'un ou de plusieurs blocs commandés par registre ;
le mode de lecture étant configuré pour fournir une sortie séquentielle, au moyen de l'agencement de chaîne de balayage, des paramètres du fichier de registres au niveau du nœud de sortie en vue de leur réception par l'élément de détermination de données de code de correction d'erreurs et de leur fourniture à l'agencement de renvoi ; et
le mode de correction étant configuré pour fournir une sortie séquentielle, au moyen de l'agencement de chaîne de balayage, des paramètres du fichier de registres en vue de leur réception par l'élément de correction d'erreurs pour fournir des paramètres avec les une ou plusieurs corrections réalisées à l'agencement de renvoi.

2. Appareil (100) selon la revendication 1, l'appareil comportant un sélecteur réglable (121) configuré pour commander celle d'une pluralité d'entrées à fournir au nœud d'entrée (105) du fichier de registres à n'importe quel autre moment, le sélecteur comprenant au moins ;
une première entrée configurée pour recevoir des paramètres avec les une ou plusieurs corrections réalisées depuis l'agencement de renvoi fournis à celui-ci par l'élément de correction d'erreurs ; et
une seconde entrée configurée pour recevoir des paramètres depuis l'agencement de renvoi fournis à celui-ci par l'agencement de chaîne de balayage sans correction par l'élément de correction d'erreurs.

3. Appareil (100) selon n'importe quelle revendication précédente, dans lequel l'élément de correction d'erreurs (109) est configuré pour assurer la correction des une ou plusieurs erreurs en déterminant les une ou plusieurs corrections au moyen des données de code de correction d'erreurs et/ou en identifiant une erreur dans un ou plusieurs des paramètres au moyen des données de code de correction d'erreurs et obtenant les une ou plusieurs corrections à partir d'un hyperviseur à renvoyer par l'intermédiaire de l'agencement de renvoi (107).

4. Appareil (100) selon n'importe quelle revendication précédente, dans lequel l'élément de correction d'erreurs (109) est configuré pour fournir, en réponse à la détermination de la présence d'une erreur dans les paramètres produits en sortie par l'agencement de chaîne de balayage qui est identifiable mais non rectifiable au moyen des données de code de correction d'erreurs prédéterminées, chaque paramètre produit en sortie par l'agencement de chaîne de balayage à l'agencement de renvoi (107).

5. Appareil (100) selon n'importe quelle revendication précédente, dans lequel l'élément de correction d'erreurs (109) est configuré pour fournir, en réponse à la détermination d'une erreur dans les paramètres produits en sortie par l'agencement de chaîne de balayage qui est identifiable mais non rectifiable au moyen des données de code de correction d'erreurs prédéterminées, une signalisation à envoyer à un hyperviseur pour réaliser une action supplémentaire.

6. Appareil (100) selon la revendication 5, dans lequel l'action supplémentaire comprend une ou plusieurs des actions suivantes ;
i) l'écriture d'un ou plusieurs paramètres dans le fichier de registres (101) ;
ii) la remise à zéro de l'appareil comprenant la mise de l'appareil dans un état d'écriture de paramètres dans le fichier de registres;
iii) la désactivation d'un bloc commandé par registre (110) configuré pour réaliser sa fonction sur la base des paramètres mémorisés dans le fichier de registres.

7. Appareil (100) selon n'importe quelle revendication précédente, l'appareil comportant un ou plusieurs des éléments suivants ;
i) une mémoire (112) pour mémoriser les données de code de correction d'erreurs prédéterminées et les fournir à l'élément de correction d'erreurs ;
ii) un élément de communication configuré pour recevoir une signalisation depuis un dispositif distant situé à distance de l'appareil indicative des corrections à apporter aux paramètres en fonction d'une signalisation adressée au dispositif distant représentative des paramètres produits en sortie par l'agencement de chaîne de balayage.

8. Appareil (100) selon n'importe quelle revendication précédente, l'appareil comportant un élément de protection de balayage configuré pour fournir au moins un sous-ensemble de paramètres aux un ou plusieurs dispositifs électroniques commandés par les paramètres du fichier de registres quand il se trouve dans un ou plusieurs des modes autres que le mode d'application.

9. Appareil (100) selon n'importe quelle revendication précédente dans lequel les données de code de correction d'erreurs sont basées sur un code systématique.

10. Appareil (100) selon n'importe quelle revendication précédente dans lequel l'élément de détermination de données de code de correction d'erreurs (108) est configuré pour assurer la détermination de données de code de correction d'erreurs pour un ou plusieurs de ;
i) chaque ensemble de paramètres produits en sortie par l'agencement de chaîne de balayage, l'ensemble comprenant les paramètres de chacune de la pluralité de chaînes à des positions de registre correspondantes le long de chaque chaîne ;
ii) chaque chaîne de registres comprenant les paramètres de tous les registres dans chaque chaîne de registres (102A-N, 103A-N) particulière ; et
iii) une pluralité de chaînes de registres comprenant les paramètres de tous les registres dans une pluralité des chaînes de registres.

11. Appareil (100) selon n'importe quelle revendication précédente, l'appareil comportant au moins un bloc commandé par registre (110) comprenant un dispositif électronique configuré pour exécuter une tâche prédéterminée sur la base des paramètres mémorisés dans au moins un ou plusieurs des registres de l'au moins une chaîne de registres.

12. Procédé pour un fichier de registres comprenant au moins une chaîne de registres, la ou chaque chaîne de registres comprenant une pluralité de registres connectés sériellement en chaîne, chaque registre de la chaîne de registres étant configuré pour mémoriser un paramètre utilisé, la chaîne de registres présentant un nœud d'entrée à une première extrémité de la chaîne et un nœud de sortie à une seconde extrémité opposée de la chaîne, le procédé comprenant :
la fourniture (301) pour leur sortie séquentielle, au niveau du nœud de sortie, des paramètres mémorisés dans les registres de la chaîne par décalage séquentiel des paramètres mémorisés dans chaque registre de la chaîne vers un registre adjacent dans la chaîne dans une direction du nœud de sortie ;
le calcul des données de code de correction d'erreurs prédéterminées des paramètres des une ou plusieurs chaînes de registres fournis au niveau du nœud de sortie par l'agencement de chaîne de balayage ;
la correction (302) d'une ou de plusieurs erreurs dans les paramètres fournis au niveau du nœud de sortie par l'agencement de chaîne de balayage sur la base des données de code de correction d'erreurs prédéterminées déterminées à partir des paramètres du fichier de registres ;
la fourniture (303) des paramètres fournis au niveau du nœud de sortie avec une ou plusieurs corrections réalisées pour leur renvoi au nœud d'entrée, permettant ainsi la récupération des paramètres mémorisés dans la chaîne de registre avec les une ou plusieurs corrections au moins une fois que tous les paramètres de la chaîne ont été produits en sortie ;
le procédé étant **caractérisé en ce qu'**il comprend en outre :
le fonctionnement dans un d'un mode d'application, d'un mode de lecture et d'un mode de correction :
dans le mode d'application, la fourniture d'une commande d'un ou plusieurs blocs commandés par registre en fonction des paramètres des registres ;
dans le mode de lecture, la fourniture d'une sortie séquentielle des paramètres du fichier de registres au niveau du nœud de sortie pour leur fourniture à l'agencement de renvoi ; et
dans le mode de correction, la fourniture d'une sortie séquentielle des paramètres du fichier de registres pour fournir des paramètres avec une ou plusieurs corrections réalisées à l'agencement de renvoi.

13. Dispositif électronique comportant l'appareil selon les revendications 1 à 11.
